# EUROPÄISCHE PATENTSCHRIFT

(11) **EP 1 843 914 B1**
(45) Veröffentlichungstag und Bekanntmachung des Hinweises auf die Patenterteilung: **23.09.2009**
(21) Anmeldenummer: 05824379.1
(22) Anmeldetag: 21.12.2005
(51) Int. Cl.: B60N 2/66, A47C 7/46

(54) **LORDOSENSTÜTZE UND VERFAHREN ZUR HERSTELLUNG EINER LORDOSENSTÜTZE**
LUMBAR SUPPORT AND METHOD FOR THE PRODUCTION THEREOF
ELEMENT DE SOUTIEN DORSOLOMBAIRE ET SON PROCEDE DE PRODUCTION

(30) Priorität: 02.02.2005 DE 202005001624 U; 02.02.2005 DE 102005004758
(43) Veröffentlichungstag der Anmeldung: 17.10.2007
(73) Patentinhaber: Schukra Gerätebau AG, 2560 Berndorf (AT)
(72) Erfinder: WEINMÜLLER, Andreas, A-2500 Baden (AT)
(74) Vertreter: Banzer, Hans-Jörg
(86) Internationale Anmeldenummer: PCT/EP2005/013790
(87) Internationale Veröffentlichungsnummer: WO 2006/081865

(56) Entgegenhaltungen:
- EP-A- 1 211 129
- EP-A- 1 479 561
- WO-A-03/092440
- US-A1- 2003 071 501
- US-A1- 2004 245 824

## Beschreibung

Die vorliegende Erfindung betrifft eine Lordosenstütze, insbesondere eine zur Aufhängung in einem Sitzrahmen bzw. Sitzgestell ausgestalte und ein Drahtgestell aufweisende Lordosenstütze, sowie ein Verfahren zur Herstellung einer derartigen Lordosenstütze.

Lordosenstützen werden in Rückenlehnen von Sitzen beliebiger Art zur Stützung des Lendenwirbel- oder Lordosenbereichs von auf den entsprechenden Sitzen sitzenden Personen eingesetzt. Insbesondere in Kraftfahrzeugsitzen kommen dabei Lordosenstützen zur Anwendung, die im Wesentlichen aus einem Drahtgestell aufgebaut sind, welches eine Sitzpolsterung auf geeignete Art und Weise versteift, jedoch eine gewisse Flexibilität zur Anpassung an die Körperhaltung und Körperform der jeweiligen Person ermöglicht. Derartige Drahtgestelle können beispielsweise zwei Längsdrähte mit einer Vielzahl von zwischen den Längsdrähten in Breitenrichtung verlaufenden Querdrähten umfassen, wobei die Querdrähte an ihren Endabschnitten um die Längsdrähte gewickelt und dadurch an den Längsdrähten befestigt sind. Die Längsdrähte weisen in der Regel einen größeren Durchmesser als die Querdrähte auf, wobei das somit gebildete Drahtgestell mithilfe von Federn oder dergleichen in einem Sitzrahmen aufgehängt sein kann.

Darüber hinaus sind relativ starre Lordosenstützen bekannt, bei welchen ein in der Regel aus Kunststoff gefertigter Lordosenstützkorb verwendet wird, der lediglich in gewissem Maße verformbar ist, wobei die Wölbung des Lordosenstützkorbs beispielsweise mithilfe einer Bowdenzuganordnung eingestellt werden kann. Dabei kann zusätzlich, beispielsweise über einen Querdraht, eine Kraftübertragung auf eine automatische oder aktive Kopfstütze vorgesehen sein, so dass bei einem Kraftfahrzeugaufprall über den Querdraht durch Kraftübertragung die Kopfstütze ausgelöst und innerhalb kürzester Zeit in eine optimale Position gebracht wird. Für die korrekte Auslösung dieser Kopfstütze muss eine relativ hohe Steifigkeit der Lordosenstütze gewährleitstet sein, wobei dies durch Versteifungen aus Draht erzielt werden kann. Die Lordosenstütze kann mit dem Sitzrahmen fest, beispielsweise durch eine Nietverbindung mithilfe eines Kunststoffclips oder dergleichen, verbunden sein.

Der Fertigungsprozess einer derartigen relativ starren Lordosenstütze stellt sich wie folgt dar. Zunächst wird der Lordosenstützkorb sowie der Clip für die Nietverbindung aus Kunststoff gespritzt. Ein Führungsdraht, welcher ein Drahtgerüst für die Lordosenstütze bildet, sowie der Querdraht zur Auslösung der aktiven Kopfstütze werden gebogen und gegebenenfalls mit Abspanndrähten, welche zur Befestigung eines Sackbezugs bzw. einer Polsterung an der Rückseite des entsprechenden Sitzes dienen, oder mit entsprechenden Drahtbügeln versehen und durch Umklammern zusammengefügt. Die genannten Komponenten werden schließlich zu der Lordosenstützanordnung zusammengesetzt und mit einer Bowdenzug- oder Seilzuganordnung, welche eine Einstellung der Wölbung des Lordosenstützkorbs ermöglicht, versehen.

Die erwähnte Lordosenstütze bzw. der entsprechende Herstellungsprozess ist jedoch mit zwei wesentlichen Problemen verbunden. Zum einen benötigt die Lordosenstütze eine relativ hohe Anzahl an Bauteilen bzw. Komponenten, und zum anderen ist die Montage der Lordosenstütze relativ aufwändig.

Aus der WO 03/092440 A1 ist eine weitere Lordosenstütze bekannt, wobei zwei Längsstäbe durch an die Längsstäbe angespritzte Querverbindungen aus Kunststoff verbunden sind. Die Längsstäbe sind vorzugsweise aus Metall gefertigt und mit Aufhängungen für die Aufhängung der Lordosenstütze in einem Sitzrahmen versehen. Ein separater Lordosenstützkorb ist einteilig mit einzelnen der Querstäben ausgebildet, wobei die Querstäbe und der Lordosenstützkorb mithilfe eines Spritzgusswerkzeugs in einem Arbeitsgang aus einem Kunststoffmaterial gefertigt werden können.

Diese bekannte Lordosenstütze erfordert jedoch insgesamt zwei Längsstäbe, mehrere aus Kunststoff gefertigte Querverbindungen sowie den ebenfalls aus Kunststoff gefertigten Lordosenstützkorb, so dass die Anzahl der Komponenten immer noch relativ hoch und die Herstellung relativ aufwändig ist. Zudem ist zur Herstellung dieser Lordosenstütze eine relativ große Menge an Kunststoffmaterial erforderlich, was die Herstellungskosten erhöht.

Der vorliegenden Erfindung liegt daher die Aufgabe zugrunde, eine Lordosenstütze, insbesondere eine eine relativ starre Stützfläche bzw. Stützauflage aufweisende Lordosenstütze bereitzustellen, welche sich einfach und kostengünstig herstellen lässt. Darüber hinaus liegt der Erfindung die Aufgabe zugrunde, ein geeignetes Herstellungsverfahren für eine derartige Lordosenstütze vorzuschlagen.

Diese Aufgabe wird erfindungsgemäß durch eine Lordosenstütze mit den Merkmalen des Anspruches 1 bzw. ein Verfahren zur Herstellung einer derartigen Lordosenstütze mit den Merkmalen des Anspruches 20 gelöst. Die Unteransprüche definieren jeweils bevorzugte und vorteilhafte Ausführungsformen der vorliegenden Erfindung.

Die erfindungsgemäße Lordosenstütze umfasst zwei Längsdrahtabschnitte und mehrere aus Kunststoff gefertigte Stützelemente, welche an den beiden Längsdrahtabschnitten angespritzt sind und sich in Querrichtung der Lordosenstütze zwischen den beiden Längsdrahtabschnitten erstrecken und seitlich über die beiden Längsdrahtabschnitte in Querrichtung fingerartig hinausstehen. Diese Stützelemente, welche in Form von Lordosenstützfingern ausgebildet sind, geben - gegebenenfalls zusammen mit der Sitzpolsterung - dem Rücken eines Benutzers im Sitz Halt und definieren über ihre Position, welche durch die Längsdrahtabschnitte vorgegeben wird, die Wölbung der Lordosenstütze und damit die Stützung der Wirbelsäule. Darüber hinaus wird über die Stützelemente ein Teil der Kraft zur Auslösung einer gegebenenfalls vorgesehenen automatischen oder aktiven Kopfstütze (AKS) in das System eingebracht.

Die beiden Längsdrahtabschnitte können durch einen einzigen entsprechend gebogenen Führungsdraht ausgebildet sein, wobei im unteren Bereich der Lordosenstütze die Biegung des Führungsdraht insbesondere derart ist, dass in das Drahtgerüst bzw. Drahtgestell eine gewisse Federung und demzufolge Elastizität in den Führungsdraht integriert ist. Ebenso können an dem Führungsdraht geeignete Befestigungsmittel, beispielsweise in Form eines Befestigungsclips, der ebenfalls aus Kunststoff gefertigt sein kann, zur Befestigung des Führungsdrahts bzw. der Lordosenstütze an einem Sitzrahmen vorgesehen sein.

An den Längsdrahtabschnitten bzw. an dem Führungsdraht können ein oder mehrere Abspanndrähte, welche wie die Stützelemente in Quer oder Breitenrichtung der Lordosenstütze verlaufen, angespritzt sein, um auf geeignete Art und Weise an ihnen bei einem Sitzhersteller mit einem Profil den Sackbezug bzw. die Polsterung an der Rückseite des Sitzes befestigen zu können. Insbesondere können die Abspanndrähte derart bemessen sein, dass sie in Querrichtung über die fingerartigen Stützelemente hinausstehen. Zur Befestigung der Abspanndrähte an den Längsdrahtabschnitten bzw. an dem Führungsdraht können Umspritzungen in Form von Dornen vorgesehen sein, welche von den Längsdrahtabschnitten nach hinten hervorstehen und die Abspanndrähte halten. An einzelnen der Stützelemente können Anschlussmittel, beispielsweise in Form von Clips, für Sitzheizungsstecker vorgesehen und ausgebildet sind, wobei diese Clips insbesondere einteilig mit den entsprechenden Stützelementen aus Kunststoff gefertigt sind. Bei einem Sitzhersteller können an diese Clips dann Sitzheizungsstecker angesteckt werden, welche wiederum mit einem Sitzheizungsmodul zu verbinden sind.

Vorzugsweise im oberen Bereich der Lordosenstütze kann ein Querdraht mit dem Führungsdraht umspritzt sein, welcher mit einem AKS-System, d.h. einem aktiven Kopfstützensystem, zu koppeln ist und bei einem Kraftfahrzeugaufprall zur Kraftübertragung auf das AKS-System und zur Auslösung der AKS-Funktion dient, um somit innerhalb kürzester Zeit die entsprechende Kopfstütze in eine für den jeweiligen Benutzer optimale Position zu verstellen. Der Querdraht ist dabei vorzugsweise mithilfe einer dickeren Umspritzung an dem Führungsdraht befestigt, wobei sich diese Umspritzung zwischen den beiden Längsdrahtabschnitten des Führungsdrahts in Querrichtung der Lordosenstütze erstrecken kann.

Die fingerartigen Stützelemente sind mit Anprägungen versehen, um ein Verrutschen an dem Führungsdraht zu verhindern. Darüber hinaus können die Stützelemente in einem gewissen Maße aus der durch den Führungsdraht bzw. die Längsdrahtabschnitte gebildeten Ebene hinausgebogen und gekrümmt sein, wobei insbesondere zwischen den beiden Längsdrahtabschnitten in den einzelnen Stützelementen eine Ausbuchtung aus der zuvor genannten Ebene hinaus ausgebildet sein kann.

Die erfindungsgemäße Lordosenstütze benötigt somit im Prinzip lediglich einen Führungsdraht als eine Drahtkomponente, wobei darüber hinaus ein Querdraht und Abspanndrähte vorgesehen sein können. Die restlichen Komponenten der Lordosenstütze sind vorzugsweise allesamt aus Kunststoff gefertigt, wobei dies insbesondere auf die fingerartigen Stützelemente, die Verbindungen zwischen dem Querdraht bzw. den Abspanndrähten und dem Führungsdraht sowie die Clips für die Sitzheizungsstecker und den Befestigungsclip zutrifft. Sämtliche Kunststoffteile können in lediglich einem Arbeitsgang auf den Führungsdraht gespritzt werden, wobei bei der Ausführungsform mit Clips für Sitzheizungsstecker zudem eine Kabelaufnahme, beispielsweise in Form einer Einclipsenvorrichtung oder dergleichen, an dem entsprechenden Stützelement einteilig ausgebildet sein kann.

Insgesamt lässt sich somit die erfindungsgemäße Lordosenstütze einfach und kostengünstig herstellen. Zur Herstellung ist lediglich erforderlich, den Führungsdraht in die gewünschte Form zu biegen, wobei anschließend sämtliche Kunststoffkomponenten mithilfe eines entsprechenden Spritzgusswerkzeugs in einem einzigen Arbeitsgang auf den Führungsdraht gespritzt werden können.

Die vorliegende Erfindung ist vorzugsweise auf Lordosenstützen für Kraftfahrzeugsitze anwendbar, wobei jedoch die Erfindung nicht auf diesen bevorzugten Anwendungsbereich beschränkt ist, sondern allgemein in Sitzen jeder Art Anwendung finden kann.

Die vorliegende Erfindung wird nachfolgend näher unter Bezugnahme auf die beigefügte Zeichnung anhand bevorzugter Ausführungsbeispiele erläutert.
Figur 1 zeigt eine Rückansicht einer Lordosenstütze gemäß einem ersten Ausführungsbeispiel der Erfindung,
Figur 2 zeigt eine Vorderansicht der Lordosenstütze von Figur 1,
Figur 3 zeigt schematisch eine mögliche Befestigung der in Figur 1 und Figur 2 gezeigten Lordosenstütze in einem Sitzrahmen,
Figur 4 zeigt eine Rückansicht einer Lordosenstütze gemäß einem zweiten Ausführungsbeispiel der Erfindung, und
Figur 5 zeigt schematisch eine mögliche Befestigung der in Figur 4 gezeigten Lordosenstütze in einem Sitzrahmen.

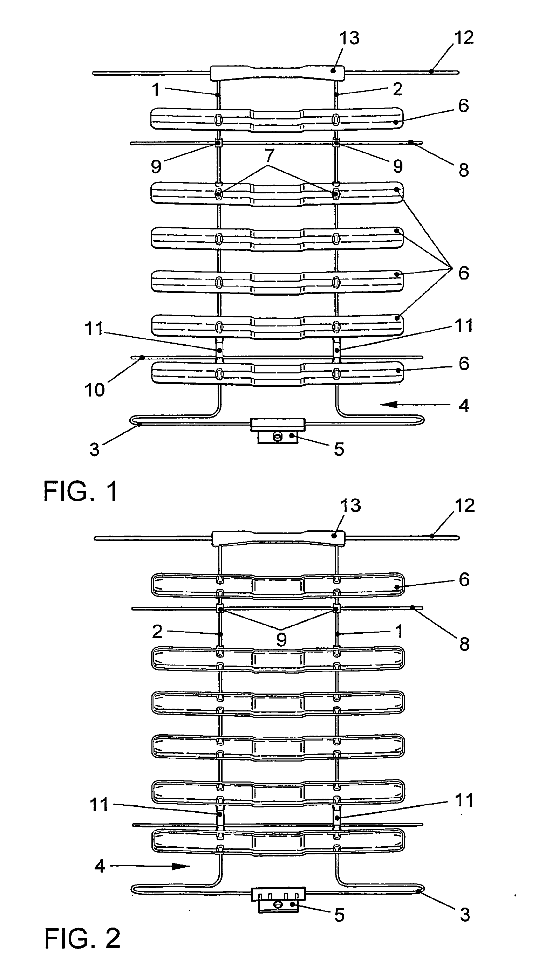

Nachfolgend wird unter Bezugnahme auf Figur 1-Figur 3 ein erstes Ausführungsbeispiel der vorliegenden Erfindung erläutert.

Die Lordosenstütze weist ein Drahtgestellt bzw. Drahtgerüst auf, welches durch einen auf geeignete Art und Weise gebogenen Führungsdraht 4 gebildet ist. Der Führungsdraht 3 bildet somit einen ersten Längsdrahtabschnitt 1 und einen zweiten Längsdrahtabschnitt 2, welche im Wesentlichen parallel zueinander in Längs- bzw. Höhenrichtung der Lordosenstütze verlaufen. Am unteren Ende der Lordosenstütze ist der Führungsdraht 4 derart gebogen, dass er von dem ersten Längsdrahtabschnitt 1 zu dem zweiten Längsdrahtabschnitt 2 verläuft, wobei gleichzeitig eine in den Führungsdraht 4 integrierte Federung bei 3 erhalten wird, welche somit der Lordosenstütze ein gewisses Maß an Flexibilität bzw. Elastizität verleiht. Insbesondere ist der Führungsdraht 4 am unteren Ende der Lordosenstütze derart gebogen, dass der Führungsdraht 4 von dem ersten Längsdrahtabschnitt 1 zunächst nach außen verläuft, anschließen umgebogen ist und dann im Wesentlichen parallel zu dem nach außen gebogenen Abschnitt des Führungsdrahts 4 zu dem zweiten Längsdrahtabschnitt 2 verläuft, wo der Führungsdraht 4 im Wesentlichen symmetrisch zu den Umbiegungen am unteren Ende des ersten Längsdrahtabschnitts 1 gebogen verläuft. Die Verbindung, welche von dem ersten Längsdrahtabschnitt 1 zu dem zweiten Längsdrahtabschnitt 2 führt, verläuft dabei im Wesentlichen parallel zu den von den Längsdrahtabschnitten 1 und 2 ausgehenden Umbiegungen und in einer Ebene hierzu, so dass diese Verbindung gegenüber der durch die Längsdrahtabschnitte 1 und 2 gebildeten Ebene geringfügig nach hinter versetzt ist. Zudem weist diese Verbindung einen aus Kunststoff gefertigten und an den Führungsdraht 4 angespritzten Befestigungsclip zur Befestigung des Führungsdrahts 4 bzw. der Lordosenstütze an einem (in Figur 1 und Figur 2 nicht gezeigten) Sitzrahmen auf.

Bei dem in Figur 1 und Figur 2 dargestellten Beispiel sind insgesamt sechs fingerartige und querverlaufende Stützelemente 6 vorgesehen, welche eine Stützfläche für den Rücken einer auf dem jeweiligen Sitz sitzenden Person bilden, wobei die Stützelemente 6 durch Umspritzungen an den bei den Längsdrahtabschnitten 1, 2 befestigt und aus Kunststoff gefertigt sind. Darüber hinaus weisen die Stützelemente 6 Anprägungen 7 auf, welche ein Verrutschen des jeweiligen Stützelements 6 an den Längsdrahtabschnitten 1, 2 bzw. an dem Führungsdraht 4 verhindern.

Wie aus Figur 1 und Figur 2 ersichtlich ist, sind die Stützelemente 6 geringfügig gebogen bzw. gewölbt, wobei insbesondere eine Ausbuchtung bzw. Auswölbung im Bereich zwischen den Längsdrahtabschnitten 1, 2 nach hinten ausgebildet sein kann.

Bei dem in Figur 1 und Figur 2 dargestellten Ausführungsbeispiel ist im oberen Bereich der Lordosenstütze ein erster Abspanndraht 8 vorgesehen, welcher ebenfalls in Querrichtung der Lordosenstütze verläuft und zur Befestigung einer Sitzsackes, bzw. einer Sitzpolsterung dient. Der Abspanndraht 8 steht bei dem dargestellten Ausführungsbeispiel seitlich über die fingerartigen Stützelemente 6 hinaus und ist an den beiden Längsdrahtabschnitten 1, 2 mithilfe von Umspritzungen 9 aus Kunststoff angebracht welche insbesondere mit dem obersten Stützelement 6 einteilig ausgebildet sind. Darüber hinaus ist im unteren Bereich der Lordosenstütze ein zweiter Abspanndraht 10 vorgesehen, welcher analog zu dem Abspanndraht 8 ausgebildet und ebenfalls an den beiden Längsdrahtabschnitten 1, 2 bzw. an dem Führungsdraht 4 befestigt ist. Hierzu sind jedoch an den beiden Längsdrahtabschnitten 1, 2 Dornen aus Kunststoff vorgesehen, welche in Form von Umspritzungen zwischen den beiden untersten Stützelementen 6 der Lordosenstütze und mit diesen einteilig an den Führungsdrahtabschnitten 1, 2 ausgebildet sind und von diesen nach hinten hervorragen, so dass der Abspanndraht 10 nach hinter versetzt von den Dornen 10 gehalten wird.

Am oberen Ende der Lordosenstütze ist ein Querdraht 12 durch eine Umspritzung 13 an dem Führungsdraht 4 angebracht, wobei die Umspritzung 13 in Querrichtung zwischen den beiden Längsdrahtabschnitten 1, 2 verläuft. Der Querdraht 12 dient - bei Integration in einen entsprechenden Kraftfahrzeugsitz - zur Auslösung einer aktiven bzw. automatischen Kopfstütze (AKS), wobei für den Fall eines Kraftfahrzeugaufpralls die von dem Benutzer auf die Lordosenstütze ausgeübte Kraft über den Querdraht 12 auf das AKS-System zur Auslösung der Kopfstütze übertragen wird, wodurch die Kopfstütze automatisch in eine optimale Position zum Auffangen des Kopfes der jeweiligen Person bewegt wird.

Bei der in Figur 1 und Figur 2 gezeigten Lordosenstütze erfolgt die Wölbung der Lordosenstütze durch die Kontur des Führungsdrahts 4 bzw. dessen Längsdrahtabschnitte 1, 2, wobei ein geeigneter Verstellmechanismus, beispielsweise in Form eines Bowdenzugs bzw. Seilzugs, vorgesehen sein kann, welcher an mindestens einem Längsendabschnitt der Lordosenstütze angreift, um die Wölbung der Lordosenstütze auf geeignete Art und Weise einzustellen.

Die Lordosenstütze umfasst somit als Drahtkomponenten den Führungsdraht 4 sowie die Abspanndrähte 8, 10 und den Querdraht 12. Darüber hinaus umfasst die Lordosenstütze als Kunststoffteile die fingerartigen Stützelemente 6, die Umspritzungen 9, 11 für die Verbindung der Abspanndrähte 8, 10 mit dem Führungsdraht 4, die Umspritzung 13 für die Verbindung des Querdrahts 12 mit dem Führungsdraht 4 und den Befestigungsclip 5, wobei sämtliche Kunststoffteile mithilfe eines geeigneten Spritzgusswerkzeugs in lediglich einem Arbeitsgang auf den Führungsdraht 4 gespritzt werden können.

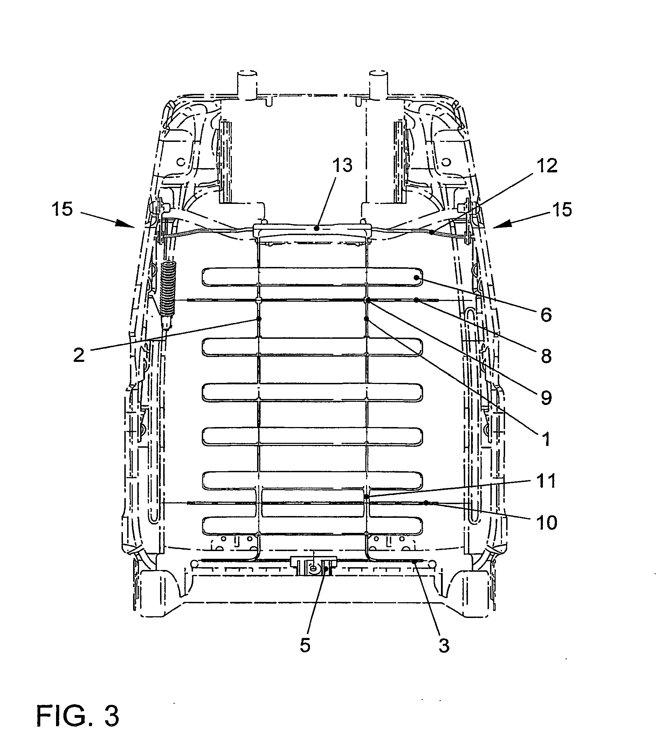

Figur 3 zeigt eine mögliche Integration der in Figur 1 und Figur 2 dargestellten Lordosenstütze in einen Sitzrahmen 14, wobei die Lordosenstütze ähnlich zu Figur 2 in einer Vorderansicht dargestellt ist. Aus Figur 3 ist ersichtlich, dass das untere Ende der Lordosenstütze über den Befestigungsclip 5 an dem Sitzrahmen 14 angebracht ist, während der Querdraht 12 mit einem Mechanismus 15 zur Auslösung einer automatischen oder aktiven Kopfstütze gekoppelt ist.

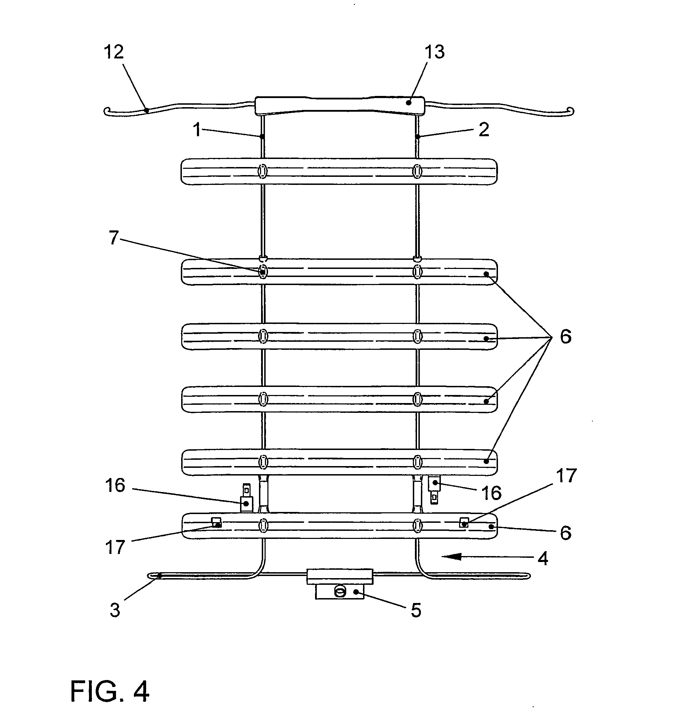

Figur 4 zeigt eine Rückansicht einer Lordosenstütze gemäß einem zweiten Ausführungsbeispiel der vorliegenden Erfindung, wobei die den in Figur 1-3 dargestellten Komponenten entsprechenden Komponenten mit denselben Bezugszeichen versehen sind und nachfolgend lediglich auf die Unterschiede zu dem in Figur 1-3 dargestellten Ausführungsbeispiel eingegangen wird.

Bei dem in Figur 4 dargestellten Ausführungsbeispiel sind keine Abspanndrähte vorgesehen. Des weiteren weist das in Figur 4 dargestellte Ausführungsbeispiel Clips 16 für Sitzheizungsstecker auf, welche aus Kunststoff gefertigt und einteilig mit den beiden unteren querverlaufenden fingerartigen Stützelementen 6 ausgebildet sind. Die an diesen Clips 16 anzubringenden Sitzheizungsstecker sind mit einem entsprechenden Sitzheizungsmodul verbunden. Das unterste Stützelement 6 weist Mittel 17 zur Aufnahme des entsprechenden Kabels, welches den Sitzheizungsstecker mit dem Sitzheizungsmodul verbindet, auf, wobei diese Kabelaufnahmemittel 17 insbesondere in Form einer Ausnehmung in dem untersten Stützelement 6 derart ausgebildet sein können, dass das Kabel durch das Stützelement 6 zu dem jeweiligen Steckerclip 16 geführt werden kann. Ebenso ist die Ausgestaltung in Form einer Einclipseneinrichtung oder dergleichen möglich.

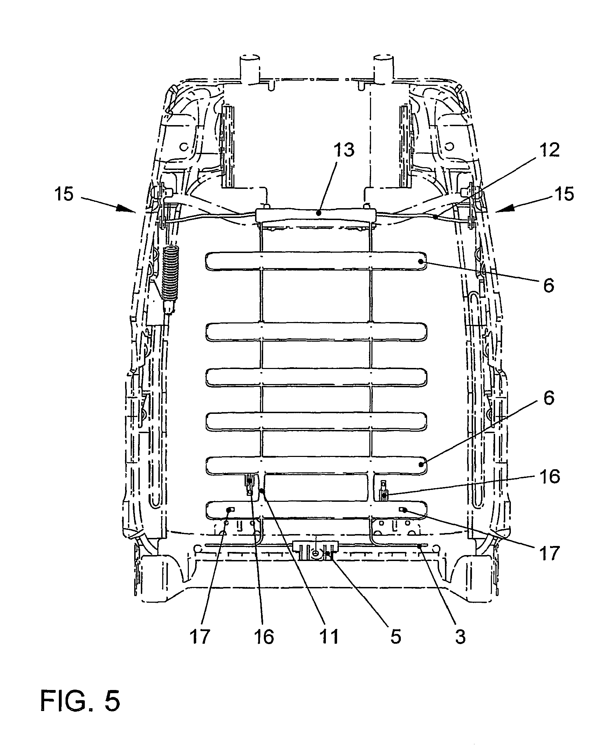

Figur 5 zeigt eine mögliche Integration der in Figur 4 dargestellten Lordosenstütze in einen Sitzrahmen 14 eines Sitzes, insbesondere eines Kraftfahrzeugsitzes, wobei diesbezüglich auf die Erläuterungen zu Figur 3 verwiesen werden kann.

## Patentansprüche

1. Lordosenstütze, umfassend
einen ersten Längsdrahtabschnitt (1) und einen zweiten Längsdrahtabschnitt (2), und mehrere aus Kunststoff gefertigte Stützelemente (6), welche sich in Querrichtung der Lordosenstütze zwischen den ersten und zweiten Längsdrahtabschnitten (1, 2) erstrecken und seitlich über die ersten und zweiten Längsdrahtabschnitte (1, 2) in Querrichtung der Lordosenstütze fingerartig hinausstehen,
**dadurch gekennzeichnet**
**dass** die Stützelemente (6) an die ersten und zweiten Längsdrahtabschnitte (1, 2) angespritzt und dadurch mit einem verhinderten verrutschen an den ersten und zweiten Längsdrahtabschnitten (1, 2) befestigt sind.

2. Lordosenstütze nach Anspruch 1,
**dadurch gekennzeichnet,**
**dass** die ersten und zweiten Längsdrahtabschnitte (1, 2) durch einen einzigen entsprechend gebogenen Draht (4) gebildet sind.

3. Lordosenstütze nach Anspruch 2,
**dadurch gekennzeichnet,**
**dass** in den gebogenen Draht (4) eine Federung (3) integriert ist.

4. Lordosenstütze nach Anspruch 3,
**dadurch gekennzeichnet,**
**dass** die Federung (3) durch mindestens einen gebogenen Abschnitt des Drahts (4) gebildet ist.

5. Lordosenstütze nach einem der vorhergehenden Ansprüche,
**dadurch gekennzeichnet,**
**dass** die Lordosenstütze Befestigungsmittel (5) zur Befestigung der Lordosenstütze an einem Sitzrahmen (14) aufweist.

6. Lordosenstütze nach Anspruch 5 und einem der Ansprüche 2-4,
**dadurch gekennzeichnet,**
**dass** die Befestigungsmittel aus Kunststoff an einem unteren Abschnitt des gebogenen Drahts (4) angespritzt sind.

7. Lordosenstütze nach einem der vorhergehenden Ansprüche,
**dadurch gekennzeichnet,**
**dass** die Lordosenstütze mindestens einen in Querrichtung der Lordosenstütze verlaufenden Draht (8, 10) zur Befestigung einer Sitzpolsterung oder eines Sitzbezugs aufweist.

8. Lordosenstütze nach Anspruch 7,
**dadurch gekennzeichnet,**
**dass** der mindestens eine Draht (8, 10) an den ersten und zweiten Längsdrahtabschnitten (1, 2) durch Umspritzungen (9, 11) aus Kunststoff befestig ist.

9. Lordosenstütze nach Anspruch 8,
**dadurch gekennzeichnet,**
**dass** die Umspritzungen dornenartig von den ersten und zweiten Längsdrahtabschnitten (1, 2) hervorstehen.

10. Lordosenstütze nach einem der Ansprüche 7-9,
**dadurch gekennzeichnet,**
**dass** mindestens zwei in Querrichtung der Lordosenstütze verlaufende Drähte (8, 10) zur Befestigung einer Sitzpolsterung oder eines Sitzbezugs vorgesehen sind, wobei ein erster Draht (8) in einem oberen Bereich der Lordosenstütze und ein zweiter Draht (10) in einem unteren Bereich der Lordosenstütze an den ersten und zweiten Längsdrahtabschnitten (1, 2) angebracht ist.

11. Lordosenstütze nach einem der vorhergehenden Ansprüche,
**dadurch gekennzeichnet,**
**dass** mindestens ein in Querrichtung der Lordosenstütze verlaufender Draht (12) zur automatischen Auslösung einer Kopfstütze an den ersten und zweiten Längsdrahtabschnitten (1, 2) angebracht ist.

12. Lordosenstütze nach Anspruche 11,
**dadurch gekennzeichnet,**
**dass** der mindestens eine Draht zur automatischen Auslösung der Kopfstütze in einem oberen Bereich der Lordosenstütze durch mindestens eine Umspritzung aus Kunststoff an den ersten und zweiten Längsdrahtabschnitten (1, 2) angebracht ist.

13. Lordosenstütze nach Anspruch 12,
**dadurch gekennzeichnet,**
**dass** die mindestens eine Umspritzung (13) sich in Querrichtung der Lordosenstütze von dem ersten Längsdrahtabschnitt (1) zu dem zweiten Längsdrahtabschnitt (2) erstreckt.

14. Lordosenstütze nach einem der Ansprüche 11-13,
**dadurch gekennzeichnet,**
**dass** der mindestens eine Draht (12) zur automatischen Auslösung der Kopfstütze sich in Querrichtung der Lordosenstütze über die Stützelemente (6) hinaus erstreckt.

15. Lordosenstütze nach einem der vorhergehenden Ansprüche,
**dadurch gekennzeichnet,**
**dass** an mindestens einem Stützelement (6) ein Anschlussmittel (16) für einen Sitzheizungsstecker vorgesehen ist.

16. Lordosenstütze nach Anspruch 15,
**dadurch gekennzeichnet,**
**dass** das Anschlussmittel (16) aus Kunststoff gefertigt und einteilig mit dem entsprechenden Sitzelement (6) ausgebildet ist.

17. Lordosenstütze nach einem der vorhergehenden Ansprüche,
**dadurch gekennzeichnet,**
**dass** an mindestens einem Stützelement (6) Kabelaufnahmemittel (17) zur Aufnahme eines Kabels ausgebikiet sind.

18. Lordosenstütze nach einem der vorhergehenden Ansprüche,
**dadurch gekennzeichnet,**
**dass** die Stützelemente (6) mit Anprägungen (7) versehen sind, um ein Verrutschen an den ersten und zweiten Längsdrahtabschnitten (1, 2) zu verhindern.

19. Sitz, umfassend
einen Sitzrahmen (14), und
eine in den Sitzrahmen (14) installierte Lordosenstütze nach einem der vorhergehenden Ansprüche.

20. Verfahren zur Herstellung einer Lordosenstütze, umfassend die Schritte Bereitstellen eines ersten Längsdrahtabschnitts (1) und eines zweiten Längsdrahtabschnitts (2), welche im Wesentlichen in Längsrichtung der Lordosenstütze verlaufen, und
Befestigen mehrerer Stützelemente (6) aus Kunststoff an den ersten und zweiten Längsdrahtabschnitten (1, 2) derart, dass die Stützelemente (6) sich in Querrichtung der Lordosenstütze zwischen den ersten und zweiten Längsdrahtabschnitten (1, 2) erstrecken und seitlich über die ersten und zweiten Längsdrahtabschnitte (1, 2) in Querrichtung der Lordosenstütze fingerartig hinausstehen,
**dadurch gekennzeichnet,**
**dass** die mehreren Stützelemente (6) durch Anspritzen an die ersten und zweiten Längsdrahtabschnitte (1, 2) mit einem verhinderten verrutschen an den ersten und zweiten Längsdrahtabschnitten (1, 2) befestigt werden.

21. Verfahren nach Anspruch 20,
**dadurch gekennzeichnet,**
**dass** die ersten und zweiten Längsdrahtabschnitte (1, 2) dadurch bereitgestellt werden, dass ein einziger Draht (4) gebogen wird, um die ersten und zweiten Längsdrahtabschnitte (1, 2) auszubilden.

22. Verfahren nach Anspruch 20 oder 21,
**dadurch gekennzeichnet,**
**dass** durch Umspritzungen aus Kunststoff (9, 11) mindestens ein in Querrichtung der Lordosenstütze verlaufender Draht (8, 10) zur Befestigung eines Sitzbezugs oder einer Sitzpolsterung an den ersten und zweiten Längsdrahtabschnitten (1, 2) angebracht wird.

23. Verfahren nach einem der Ansprüche 20-22,
**dadurch gekennzeichnet,**
**dass** durch mindestens eine Umspritzung aus Kunststoff (13) mindest ein in Querrichtung der Lordosenstütze verlaufender Draht (12) zur automatischen Auslösung einer Kopfstütze an den ersten und zweiten Längsdrahtabschnitten (1, 2) angebracht wird.

24. Verfahren nach einem der Ansprüche 20-23,
**dadurch gekennzeichnet,**
**dass** das Verfahren zur Herstellung einer Lordosenstütze nach einem der Ansprüche 1-18 durchgeführt wird.

## Claims

1. Lumbar support, comprising
a first longitudinal wire portion (1) and a second longitudinal wire portion (2), and
a plurality of support elements (6) made from plastics, which extend in a transverse direction of the lumbar support between the first and second longitudinal wire portions (1, 2) and protrude laterally in a finger-like manner beyond the first and second longitudinal wire portions (1, 2) in the transverse direction of the lumbar support,
**characterized in that**
the support elements (6) are injection moulded onto the first and second longitudinal wire portions (1, 2) and thereby fixed to the first and second longitudinal wire portions (1, 2) with slipping being avoided.

2. Lumbar support according to claim 1,
**characterized in that**
the first and second longitudinal wire portions (1, 2) are formed by a single correspondingly bent wire (4).

3. Lumbar support according to claim 2,
**characterized in that**
a resilience (3) is incorporated in the bent wire (4).

4. Lumbar support according to claim 3,
**characterized in that**
the resilience (3) is formed by at least one bent portion of the wire (4).

5. Lumbar support according to any of the preceding claims,
**characterized in that**
the lumbar support comprises fastening means (5) to fasten the lumbar support to a seat frame (14).

6. Lumbar support according to claim 5 and any of claims 2-4,
**characterized in that**
the fastening means are injection moulded from plastics onto a lower portion of the bent wire (4).

7. Lumbar support according to any of the preceding
claims,
**characterized in that**
the lumbar support comprises at least one wire (8, 10) extending transversely to the lumbar support to fasten seat upholstery or a seat cover.

8. Lumbar support according to claim 7,
**characterized in that**
the at least one wire (8, 10) is fastened to the first and second longitudinal wire portions (1, 2) by overmouldings (9, 11) made from plastics.

9. Lumbar support according to claim 8,
**characterized in that**
the overmouldings protrude in a pin-like manner from the first and second longitudinal wire portions (1, 2) .

10. Lumbar support according to any of claims 7-9,
**characterized in that**
at least two wires (8, 10) extending transversely to the lumbar support are provided to fasten seat upholstery or a seat cover, a first wire (8) in an upper region of the lumbar support and a second wire (10) in a lower region of the lumbar support being attached to the first and second longitudinal wire portions (1, 2).

11. Lumbar support according to any of the preceding
claims,
**characterized in that**
at least one wire (12) extending transversely to the lumbar support is attached to the first and second longitudinal wire portions (1, 2) for the automatic actuation of a head restraint.

12. Lumbar support according to claim 11,
**characterized in that**
the at least one wire for the automatic actuation of the head restraint in an upper region of the lumbar support is attached to the first and second longitudinal wire portions (1, 2) by at least one overmoulding made from plastics.

13. Lumbar support according to claim 12,
**characterized in that**
the at least one overmoulding (13) extends transversely to the lumbar support from the first longitudinal wire portion (1) to the second longitudinal wire portion (2).

14. Lumbar support according to any of claims 11 - 13,
**characterized in that**
the at least one wire (12) extends outwardly beyond the support elements (6) transversely to the lumbar support for the automatic actuation of the head restraint.

15. Lumbar support according to any of the preceding
claims,
**characterized in that**
on at least one support element (6) a connecting means (16) is provided for a heated seat plug.

16. Lumbar support according to claim 15,
**characterized in that**
the connecting means (16) is made from plastics and is constructed in one piece with the corresponding support element (6).

17. Lumbar support according to any of the preceding
claims,
**characterized in that**
cable receiving means (17) are constructed on at least one support element (6) to receive a cable.

18. Lumbar support according to any of the preceding
claims,
**characterized in that**
the support elements (6) are provided with embossed portions (7) to prevent slippage on the first and second longitudinal wire portions (1, 2).

19. Seat, comprising a seat frame (14) and
a lumbar support installed in the seat frame (14), according to any of the preceding claims.

20. Method for manufacturing a lumbar support, comprising the steps:
providing a first longitudinal wire portion (1) and a second longitudinal wire portion (2) which extend substantially in a longitudinal direction of the lumbar support, and
fixing a plurality of support elements (6) made from plastics to the first and second longitudinal wire portions (1, 2), such that the support elements (6) extend in the transverse direction of the lumbar support between the first and second longitudinal wire portions (1, 2) and protrude laterally in a finger-like manner beyond the first and second longitudinal wire portions (1, 2) in the transverse direction of the lumbar support,
**characterized in that**
the plurality of support elements (6) are fixed to the first and second longitudinal wire portions (1, 2) by injection moulding onto the first and second longitudinal wire portions (1, 2) with slipping being avoided.

21. Method according to claim 20,
**characterized in that**
the first and second longitudinal wire portions (1, 2) are provided by a single wire (4) being bent in order to construct the first and second longitudinal wire portions (1, 2).

22. Method according to claim 20 or 21,
**characterized in that**
at least one wire (8, 10) extending transversely to the lumbar support is attached by overmouldings made from plastics (9, 11) to the first and second longitudinal wire portions (1, 2) to fasten a seat cover or seat upholstery.

23. Method according to any of claims 20-22,
**characterized in that**
at least one wire (12) extending transversely to the lumbar support is attached by at least one overmoulding made from plastics (13) to the first and second longitudinal wire portions (1, 2) for the automatic actuation of a head restraint.

24. Method according to any of claims 20-23,
**characterized in that**
the method for manufacturing a lumbar support is carried out according to any of claims 1 - 18.

## Revendications

1. Elément de soutien dorsolombaire, comprenant
un premier segment de fil longitudinal (1) et un deuxième segment de fil longitudinal (2), et plusieurs éléments de soutien en matière plastique (6) qui s'étendent dans la direction perpendiculaire par rapport à l'élément de soutien dorsolombaire entre les premier et deuxième segments de fil longitudinaux (1, 2) et dépassent latéralement sous la forme d'un doigt au-dessus des premier et deuxième segments de fil longitudinaux (1, 2) dans la direction perpendiculaire de l'élément de soutien dorsolombaire,
**caractérisé en ce que**
les éléments de soutien (6) sont injectés au niveau des premier et deuxième segments de fil longitudinaux (1, 2) et **caractérisés en ce qu'**ils sont fixés au niveau des premier et deuxième segments de fil longitudinaux (1, 2) avec un glissement empêché.

2. Elément de soutien dorsolombaire selon la revendication 1,
**caractérisé en ce**
**que** les premier et deuxième segments de fil longitudinaux (1, 2) sont formés par un fil unique (4) courbé de façon appropriée.

3. Elément de soutien dorsolombaire selon la revendication 2,
**caractérisé en ce**
**qu'**une suspension (3) est intégrée dans le fil courbé (4).

4. Elément de soutien dorsolombaire selon la revendication 3,
**caractérisé en ce**
**que** la suspension (3) est formée par au moins un segment courbé du fil (4).

5. Elément de soutien dorsolombaire selon l'une des revendications précédentes,
**caractérisé en ce**
**que** l'élément de soutien dorsolombaire présente un moyen de fixation (5) pour fixer l'élément de soutien dorsolombaire à un cadre d'assise (14).

6. Elément de soutien dorsolombaire selon la revendication 5 et selon les revendications 2 à 4,
**caractérisé en ce**
**que** le moyen de fixation en plastique est injecté au niveau d'un segment inférieur du fil courbé (4).

7. Elément de soutien dorsolombaire selon l'une des revendications précédentes,
**caractérisé en ce**
**que** l'élément de soutien dorsolombaire présente au moins un fil (8, 10) évoluant dans une direction perpendiculaire par rapport à l'élément de soutien dorsolombaire pour fixer un rembourrage d'assise ou un revêtement d'assise.

8. Elément de soutien dorsolombaire selon la revendication 7,
**caractérisé en ce**
**qu'**au moins un fil (8, 10) est fixé au niveau des premier et deuxième segments de fil longitudinaux (1, 2) par des enrobages par injection (9, 11) de matière plastique.

9. Elément de soutien dorsolombaire selon la revendication 8,
**caractérisé en ce**
**que** les enrobages par injection dépassent sous forme d'épine des premier et deuxième segments de fil longitudinaux (1, 2).

10. Elément de soutien dorsolombaire selon l'une des revendications 7 à 9,
**caractérisé en ce**
**qu'**au moins deux fils (8, 10) évoluant en direction perpendiculaire par rapport aux éléments de soutien sont prévus pour fixer un rembourrage d'assise ou un revêtement d'assise, un premier fil (8) étant aménagé dans une zone supérieure de l'élément de soutien dorsolombaire et un deuxième fil (10) étant aménagé dans une zone inférieure de l'élément de soutien dorsolombaire au niveau des premier et deuxième segments de fil longitudinaux (1, 2).

11. Elément de soutien dorsolombaire selon l'une des revendications précédentes,
**caractérisé en ce**
**qu'**au moins un fil (12) évoluant dans une direction perpendiculaire par rapport à l'élément de soutien dorsolombaire est aménagé pour le détachement automatique d'un appui-tête au niveau des premier et deuxième segments de fil longitudinaux (1, 2).

12. Elément de soutien dorsolombaire selon la revendication 11,
**caractérisé en ce**
**qu'**au moins un fil de détachement automatique de l'appui-tête est aménagé dans une zone supérieure de l'élément de soutien dorsolombaire par au moins un enrobage par injection de matière plastique au niveau des premier et deuxième segments de fil longitudinaux (1, 2).

13. Elément de soutien dorsolombaire selon la revendication 12,
**caractérisé en ce**
**qu'**au moins un enrobage par injection (13) s'étend dans une direction perpendiculaire par rapport à l'élément de soutien dorsolombaire du premier segment de fil longitudinal (1) au deuxième segment de fil longitudinal (2).

14. Elément de soutien dorsolombaire selon l'une des revendications 11 à 13,
**caractérisé en ce**
**qu'**au moins un fil (12) s'étend pour le détachement automatique de l'appui-tête, dans la direction perpendiculaire par rapport à l'élément de soutien dorsolombaire au-dessus des éléments de soutien (6).

15. Elément de soutien dorsolombaire selon l'une des revendications précédentes,
**caractérisé en ce**
**qu'**un moyen de raccordement (16) est prévu au niveau d'un moins un élément de soutien (6) pour une prise de chauffage d'assise.

16. Elément de soutien dorsolombaire selon la revendication 15,
**caractérisé en ce**
**que** le moyen de raccordement (16) est en matière plastique et est d'un seul tenant avec l'élément d'assise (6) correspondant.

17. Elément de soutien dorsolombaire selon l'une des revendications précédentes,
**caractérisé en ce**
**que** sur moins un élément d'appui (6) est formé un moyen de réception de câble (17) pour recevoir un câble.

18. Elément de soutien dorsolombaire selon l'une des revendications précédentes,
**caractérisé en ce**
**que** les éléments d'appui (6) sont dotés d'empreintes (7) pour empêcher un glissement au niveau des premier et deuxième segments de fil longitudinaux (1, 2).

19. Assise comprenant
un cadre d'assise (14) et
un élément de soutien dorsolombaire installé dans le cadre d'assise (14) selon l'une des revendications précédentes.

20. Procédé de production d'un élément de soutien dorsolombaire, comprenant les étapes consistant à mettre à disposition un premier segment de fil longitudinal (1) et un deuxième segment de fil longitudinal (2) qui évoluent essentiellement dans la direction longitudinale de l'élément de soutien dorsolombaire et
à fixer plusieurs éléments de soutien (6) en matière plastique au niveau des premier et deuxième segments de fil longitudinaux (1, 2) de telle sorte que l'élément de soutien (6) s'étende en direction perpendiculaire par rapport à l'élément de soutien dorsolombaire entre les premier et deuxième segments de fil longitudinaux (1, 2) et dépassent latéralement sous la forme d'un doigt, sur les premier et deuxième segments de fil longitudinaux (1, 2) dans la direction perpendiculaire par rapport à l'élément de soutien dorsolombaire,
**caractérisé en ce**
**que** les multiples éléments de soutien (6) sont fixés par injection au niveau des premier et deuxième segments de fil longitudinaux (1, 2), aux premier et deuxième segments de fil longitudinaux (1, 2) avec un glissement empêché.

21. Procédé selon la revendication 20,
**caractérisé en ce**
**que** les premier et deuxième segments de fil longitudinaux (1, 2) sont disposés de telle sorte qu'un fil unique (4) est courbé pour former les premier et deuxième segments de fil longitudinaux (1, 2).

22. Procédé selon la revendication 20 ou 21,
**caractérisé en ce**
**que,** par l'enrobage par injection en matière plastique (9, 11), au moins un fil évoluant dans la direction perpendiculaire par rapport à l'élément de soutien dorsolombaire (8, 10) est aménagé pour fixer un revêtement d'assise ou un rembourrage d'assise au niveaux des premier et deuxième segments de fil longitudinaux (1, 2).

23. Procédé selon l'une des revendications 20 à 22,
**caractérisé en ce**
**que**, par au moins un enrobage par injection en matière plastique (13), au moins un fil (12) évoluant dans la direction perpendiculaire par rapport à l'élément de soutien dorsolombaire, est aménagé pour le détachement automatique de l'appui-tête au niveau des premier et deuxième segments de fil longitudinaux (1, 2) .

24. Procédé selon l'une des revendications 20 à 23,
**caractérisé en ce**
**que** le procédé est réalisé pour produire un élément de soutien dorsolombaire selon l'une des revendications 1 à 18.
